# EUROPÄISCHE PATENTSCHRIFT

(11) **EP 0 829 520 B1**
(45) Veröffentlichungstag und Bekanntmachung des Hinweises auf die Patenterteilung: **13.10.2004**
(21) Anmeldenummer: 97810639.1
(22) Anmeldetag: 08.09.1997
(51) Int. Cl.: C08L 101/00

(54) **Antistatische Zusammensetzung**
Antistatic composition
Composition antistatique

(30) Priorität: 16.09.1996 CH 225896
(43) Veröffentlichungstag der Anmeldung: 18.03.1998
(73) Patentinhaber: Ciba Specialty Chemicals Holding Inc., 4057 Basel (CH)
(72) Erfinder: Hilti, Bruno, 4054 Basel (CH); Minder, Ernst, 4450 Sissach (CH); Pfeiffer, Jürgen, 4153 Reinach (CH); Grob, Markus, 4123 Allschwil (CH)

(56) Entgegenhaltungen:
- EP-A- 0 555 197
- EP-A- 0 789 049
- WO-A-93/24555
- US-A- 4 855 077
- US-A- 5 190 819

## Beschreibung

Die Erfindung betrifft eine Zusammensetzung, enthaltend ein thermoplastisches oder elastomeres polymeres Substrat (A) und ein antistatisches Gemisch (B) in Form sich berührender Fasern, welches (b1) ein im thermoplastischen oder elastomeren polymeren Substrat (A) nicht lösliches, faserförmiges oder beim Mischen faserbildendes, organisches polymeres Material; (b2) ein zur Ionenleitung befähigtes Polymer oder Copolymer, welches komplexierende oder solvatisierende Blöcke für ein Salz einer anorganischen oder niedermolekularen organischen Protonensäure (b3) aufweist, und eine bessere Kompatibilität zum faserförmigen oder beim Mischen faserbildenden organischen Polymeren (b1) als zum polymeren organischen Substrat (A) besitzt; und (b3) ein Salz einer anorganischen oder niedermolekularen organischen Protonensäure, welches im Polymer oder Copolymer (b2) komplexiert oder solvatisiert ist, enthält. Die Erfindung betrifft auch das antistatische Gemisch (B) als solches, seine Verwendung zur antistatischen Ausrüstung von Polymeren sowie ein Verfahren zur Herstellung antistatisch ausgerüsteter thermoplastischer oder elastomerer polymerer Substrate.

Es ist bekannt, dass Polymere einer starken elektrostatischen Aufladung unterliegen und einmal aufgebrachte Ladungen wegen der geringen elektrischen Leitfähigkeit von Polymeren nur langsam abgeführt werden können. Neben ästhetischen Gründen erfordern jedoch vielfach Sicherheitsaspekte einen raschen Ladungsabfluss. An Beeinträchtigungen beim Gebrauch lassen sich nennen: Verschmutzung von Polymeroberflächen, elektrische Schläge von Personen bei Kontakt mit Polymeren, Produktionsstörungen durch Verkleben von Folienbahnen, Zerstörung von elektronischen Bauteilen, Klumpenbildung bei Polymerpulvern und Funkenbildung durch zu starke Aufladungen mit nachfolgender Zündung, was schon häufig zu schweren Explosionen geführt hat.

Es ist bekannt, eine statische Aufladung durch den Zusatz von Additiven, welche die Oberflächenleitfähigkeit verbessern, zu begrenzen. Diese Stoffe haben jedoch den Nachteil, dass sie bei geringer Luftfeuchtigkeit praktisch unwirksam sind. Es ist daher besser, Additive zu verwenden, welche bei geringer Luftfeuchtigkeit wirksam sind, was üblicherweise durch eine Erhöhung der Volumenleitfähigkeit erreicht werden kann. Die bekannten Stoffe zur Erhöhung der Volumenleitfähigkeit, beispielsweise Russ oder Metallpulver, ändern jedoch die mechanischen Eigenschaften der Polymeren und sind für transparente Polymere nicht anwendbar. Hinzu kommt immer häufiger die Forderung, dass Additive ökologisch unbedenklich sein sollen.

Weitere Ausführungen zu antistatischen Additiven und dem Mechanismus der statischen Aufladung finden sich beispielsweise im "Plastics Additives Handbook", Herausgeber R. Gächter und H. Müller, Hanser Verlag, 3.Auflage, 1990, Seiten 749-775.

Um eine permanente antistatische Ausrüstung zu erreichen, wurde bereits in der DE-A-4 324 062 vorgeschlagen, Materialien mit grosser Oberfläche wie zum Beispiel Fasern mit einem halbleitenden farblosen Material wie zum Beispiel Zinnoxid zu beschichten. Dieses beschichtete Material kann dann dem Polymergranulat zugemischt und mit diesem verarbeitet werden. Die Herstellung dieser Beschichtung ist allerdings aufwendig, da die halbleitende Verbindung durch Tränkung von faserförmigen Trägern mit einer wässrigen Salzlösung, anschliessendem Trocknen und einer darauf folgenden thermischen Konditionierung des abgeschiedenen Salzes vorgenommen werden muss. Diese chemischen und thermischen Prozesse auf der Faser können die Faser schädigen, so dass es zu einer geringeren Leitfähigkeit kommen kann, als von der Leitfähigkeit der Halbleiter zu erwarten wäre. Ein weiterer Nachteil ist, dass die Fasern durch mechanische Belastung knicken, und der spröde Halbleiterüberzug beschädigt werden kann, und dadurch die Leitfähigkeit ebenfalls beeinträchtigt wird.

Eine andere Möglichkeit wird in der DE-A-4 316 607 beschrieben. Dort wird vorgeschlagen, metallisierte Kunststoffasern, wie sie sich bereits im Handel befinden, Schmier-, Kleb-, oder Beschichtungsstoffen zuzusetzen und damit deren elektrische Leitfähigkeit zu erhöhen. Metallisierte Fasern sind jedoch relativ teuer, aufwendig herzustellen und setzen die Transparenz des Polymers, in das sie eingearbeitet werden stark herab. Mechanische Schädigungen der leitfähigen Schicht und selbst der Faser (Bruch) können auch hier nicht ganz vermieden werden.

In der EP-A-0 613 919 werden bestimmte Polyetheresteramide als antistatische Zusätze für thermoplastische Polymere vorgeschlagen. In spezifischen Ausführungsformen können zusätzlich Alkali- oder Erdalkalihalogenide zugesetzt werden. Zur Verbesserung von Adhäsion und mechanischen Eigenschaften wird vorgeschlagen, zusätzlich ein die Kompatibilität zwischen thermoplastischem Substrat und dem Polyetheresteramid vermittelndes Polymer zuzusetzen. Kompatibilität und gute Mischbarkeit der Polymeren erscheint bei dem dort vorgeschlagenen Konzept der antistatischen Ausrüstung eine wichtige Eigenschaft zu sein.

Aufgrund der vorstehend erwähnten Beschränkungen der bekannten antistatischen Ausrüstungen besteht weiterhin das Bedürfnis nach einem antistatisch wirkenden, ökologisch unbedenklichen und bei geringer Luftfeuchtigkeit wirksamen Additivsystem für die Erhöhung der Volumenleitfähigkeit, das einfach herstellbar, einfach in das Polymere einarbeitbar bzw. mit ihm mischbar ist, die erzielte Volumenleitfähigkeit des Polymeren über einen langen Zeitraum erhält und ohne nennenswerte Einschränkung in niedrigen Mengen in allen handelsüblichen Polymeren eingesetzt werden kann.

Es wurde nun gefunden, dass man ein faserbildendes oder faserförmiges organisches polymeres Material zusammen mit einem weiteren zur Ionenleitung befähigten Polymeren oder Copolymeren so in ein thermoplastisches oder elastomeres Substrat einarbeiten kann, dass das Polymere oder Copolymere im wesentlichen an der Faser adsorptiv gebunden oder in ihr gelöst ist und mit ihr zusammen ein Netzwerk im thermoplastischen oder elastomeren Substrat, in dem die Faser nicht löslich ist, ausbildet. Ein Teilbereich des zur lonenleitung befähigten Polymeren oder Copolymeren besitzt dabei polare Gruppen, die ein Salz einer anorganischen oder organischen Protonensäure komplexieren oder solvatisieren können.

Das faserförmige oder faserbildende organische polymere Material muss dabei so ausgewählt werden, dass es sich im thermoplastischen oder elastomeren Substrat nicht löst sondern eine netzartige Struktur sich berührender Fasern ausbilden kann.

Vorteilhaft für eine gute elektrische Leitfähigkeit ist, dass sich die Fasern des organischen Materials an möglichst vielen Stellen berühren oder überkreuzen, wenn sie im Polymeren eingearbeitet sind. Dadurch entstehen elektrisch leitende Bahnen, in denen die Ladungen abfliessen können.

Da es sich bei den Fasern und bei den zur Ionenleitung befähigten Polymeren oder Copolymeren um hochmolekulare Verbindungen handelt, besteht auch kaum die Gefahr des Ausschwitzens, was zu besonders dauerhaften antistatischen Ausrüstungen führt.
Die Stabilitätseigenschaften des Polymeren wie Thermostabilität, Licht- und Hydrolysebeständigkeit bleiben in den meisten Fällen nahezu unbeeinflusst.

Im Bereich niedriger Zusatzmengen werden auch die optischen Eigenschaften nur wenig verändert und transparente Materialien bleiben im wesentlichen transparent, was für viele Einsatzgebiete von grosser Bedeutung ist.

Ein Gegenstand der Erfindung ist eine Zusammensetzung, enthaltend ein thermoplastisches oder elastomeres polymeres Substrat (A) und ein antistatisches Gemisch (B) in Form sich berührender Fasern, welches
(b1) ein im thermoplastischen oder elastomeren polymeren Substrat (A) nicht lösliches, faserförmiges oder beim Mischen faserbildendes, organisches polymeres Material ist und ausgewählt wird aus der Gruppe bestehend aus Polyacrylsäureester, Polymethacrylsäureester, Polyacryinitril, Polyvinylalkohol, Polyvinylacetat, Polyamid, Polyurethan und Polyester;
(b2) ein zur Ionenleitung befähigtes Polymer oder Copolymer, welches komplexierende oder solvatisierende Blöcke für ein Salz einer anorganischen oder niedermolekularen organischen Protonensäure (b3) aufweist, und eine bessere Kompatibilität zum faserförmigen oder beim Mischen faserbildenden organischen Polymeren (b1) als zum polymeren organischen Substrat (A) besitztund welches ausgewählt wird aus der Gruppe bestehend aus oligoethoxyliertem Acrylat oder Methacrylat, in para Stellung oligoethoxyliertem Styrol, Polyetherurethan, Polyetherharnstoff, Polyetheramid, Polyetheresteramid und Polyetherester; und
(b3) ein Salz einer anorganischen oder niedermolekularen organischen Protonensäure, welches im Polymeren oder Copolymeren (b2) komplexiert oder solvatisiert ist und ausgewählt wird aus der Gruppe bestehend aus LiClO₄, LiCF₃SO₃, NaClO₄, LiBF₄, NaBF₄, KBF₄, NaCF₃SO₃, KClO₄, KPF₆, KCF₃SO₃, KC₄F₉SO₃, Ca(ClO₄)₂, Ca(PF₆)₂, Mg(ClO₄)₂, Mg(CF₃SO₃)₂, Zn(ClO₄)₂, Zn(PF₆)₂ und Ca(CF₃SO₃)₂;
enthält.

Beispiele für thermoplastische oder elastomere Polymere sind nachfolgend aufgeführt.
1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE), verzweigtes Polyethylen niederer Dichte (VLDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, Vlb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder p- oder s-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen la, lla und/oder IIIa sind. Die Aktivatoren können beispielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-lsobutylen-Copolymere, Ethylen-Buten-1-Copolymere, Ethylen--Hexen-Copolymere, Ethylen-Methylpenten-Copolymere, Ethylen-Hepten-Copolyme<e, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-lsopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxid, Polypropylenoxid oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylenisophthalamid. Block-Copolymere der vorstehend genannten Polyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Natürliche Polymere, wie Naturkautschuk oder polymerhomolog chemisch abgewandelte Derivate der Cellulose, wie Celluloseacetate, -propionate und -butyrate, bzw. die Celluloseether, wie Methytcellulose.
22. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

Bevorzugt ist das thermoplastische oder elastomere polymere Substrat (A) ein Polyolefin, Polystyrol, Copolymeres aus Acrylnitril-Butadien-Styrol (ABS), Polymeres aus α,β-ungesättigten Säuren, halogenhaltiges Polymeres, Homo- und Copolymeres von cyclischen Ethern, Polymeres von ungesättigten Alkoholen und Aminen, Polyacetal, Polyphenylenoxid, Polyurethan, Polyamid, Polyester, Polyharnstoff, Polycarbonat, Polysulfon oder Naturkautschuk.

Besonders bevorzugt ist das thermoplastische oder elastomere polymere Substrat (A) ein Polyolefin, Polystyrol, Acrylnitril-Butadien-Styrol (ABS) Copolymeres, Polymeres aus α,β-ungesättigten Säuren, halogenhaltiges Polymeres oder Homo- und Copolymeres von cyclischen Ethern.

Ganz besonders bevorzugt ist das thermoplastische oder elastomere polymere Substrat (A) Polyvinylchlorid (PVC), Polystyrol, Polyethylen in seinen verschiedenen Modifikationen oder Polypropylen.

Das faserförmige oder faserbildende organische polymere Material (b1) kann bereits in Form von langen gesponnenen Fasern oder in Form geschnittener Stapelfasern vorliegen und so verwendet werden. Es ist auch möglich, die vorhandenen Fasern in Form eines Flächennetzwerks, als Webmuster, als Vlies oder als Filz einzusetzen.

Bevorzugt enthalten die Fasern das zur Ionenleitung befähigte Polymer oder Copolymer (b2) an der Oberfläche oder im Querschnitt und stehen in der Polymermatrix in Kontakt miteinander, da dadurch die Volumenleitfähigkeit über Ionen erfolgen kann.

Das faserförmige organische Material weist im allgemeinen eine Länge von 0,01 bis 200 mm, bevorzugt 0,1 bis 20 mm auf. Es kann sich dabei um makroskopische Fasern handeln, es können aber auch kleine Fibrillen mit mikroskopischen Hohlräumen vorliegen.

Es ist jedoch auch möglich, das faserförmige oder faserbildende organische polymere Material als Granulat oder als Pulver einzusetzen. Beim Mischen und Verarbeiten mit dem polymeren Substrat z. B. in Kalandern, Dreiwalzenstühlen, Extrudern oder Knetern wird eine faserförmige oder fibrillare Ausrichtung dadurch erreicht, dass das faserbildende organische polymere Material im Substratpolymeren nicht löslich ist und sich durch den Verarbeitungs- bzw. Mischprozess im wesentlichen in eine Dimension erstreckt. Gegebenenfalls kann durch einen anschliessenden zusätzlichen Verstreckprozess das Ergebnis noch verbessert werden. Verfahren zum Mischen bzw. Verarbeiten von thermoplastischen oder elastomeren Polymeren sind dem Fachmann bekannt und zum Beispiel in Kunststoff-Taschenbuch, 12. Ausgabe, Hanser Verlag 1979, Seiten 35-195 beschrieben.

Besonders bevorzugt ist das faserförmige oder beim Mischen faserbildende polymere Material (b1) ein Polyester, Polyamid (x) oder Polyamid (x,y), worin x und y unabhängig voneinander eine Zahl von 4 bis 14 bedeuten.

Ganz besonders bevorzugt ist Polyamid 4,6, Polyamid 6,6, Polyamid 6 oder das Copolyamid 6/ 6,6.

Faserförmige oder faserbildende Polymere sind in einer Vielzahl im Handel erhältlich. Liegt bereits faserförmiges Material vor, so kann dies in verschiedenen Faserstärken gewählt werden. Faserstärken werden dabei üblicherweise in dtex (g / 10000 m) angegeben. Typisch sind 0,5 bis 500 dtex, bevorzugt verwendet man Faserstärken von 1 bis 100 dtex.

Bevorzugte Polymere oder Copolymere (b2) sind Polyetheramide oder Polyetheresteramide.

Ganz besonders bevorzugt ist ein Block-Copolymeres Polyetheresteramid, wobei die Polyethersegmente aus Polyethylenglykoleinheiten mit einem Molekulargweicht Mₙ von 200 bis 6000 Dalton bestehen und die Polyamidsegmente aus Polyamid (x) oder Polyamid (x,y) mit einem Molekulargewicht Mₙ von 200 bis 6000 Dalton bestehen, und x und y eine Zahl von 4 bis 14 bedeuten.

Geeignete Polyetheresteramide sind zum Beispiel in der EP-A-613 919 beschrieben.

Weitere ebenfalls gut geeignete Polyetheresteramide sowie deren Herstellung sind in der DE-OS-25 23 991 beschrieben.

Erfindungsgemäß einzusetzende Polymere oder Copolymere sind im Handel erhältlich oder können zum Beispiel nach einem in der EP-A-613 919 oder in der DE-OS-25 23 991 angegebenen Verfahren hergestellt werden.

Eine wichtige Bedingung bei der Auswahl der Polymeren oder Copolymeren (b2) in Verbindung mit dem faserförmigen oder faserbildenden Material (b1) ist, dass beide eine höhere Affinität zueinander aufweisen als zu dem thermoplastischen oder elastomeren polymeren Substrat.
Dies lässt sich zum Beispiel dadurch erreichen, dass beide zum Teil das gleiche Polymergerüst aufweisen. Beispiele hierfür sind, wenn (b1) aus Polyamid und (b2) aus Polyetheresteramid, (b1) aus Polyester und (b2) aus Polyetheresteramid oder Polyether-. ester, (b1) aus Acrylnitril und (b2) aus oligoethoxyliertem Acrylat oder Methacrylat besteht und das thermoplastische oder elastomere polymere Substrat (A) beispielsweise ein Polyolefin oder PVC ist.

Die Salze b3) können in verschiedenen hydratisierten Formen auftreten und mit oder ohne Hydratwasser eingesetzt werden.

Bevorzugt ist das Salz (b3) in einer Menge von 0,05-10 Gew. %, besonders bevorzugt in einer Menge von 0,5-5 Gew. % bezogen auf das Copolymere (b2) vorhanden.

Bevorzugt beträgt das Massenverhältnis von faserförmigem oder beim Mischen faserbildenden organischen polymeren Material (b1) zu Copolymerem (b2) von 20 zu 1 bis 1 zu 10, besonders bevorzugt von 10 zu 1 bis 1 zu 3.

Bevorzugt ist das antistatisch wirksame Gemisch aus den Komponenten (b1), (b2) und (b3) in einer Gesamtmenge von 0,1 bis 15 Gew.-%, besonders bevorzugt 1 bis 15 Gew.-% und ganz besonders bevorzugt 5 bis 15 Gew.-% bezogen auf das thermoplastische oder elastomere polymere Substrat vorhanden.

Eine bevorzugte erfindungsgemässe Zusammensetzung enthält als thermoplastisches oder elastomeres polymeres Substrat (A) PVC, Polyethylen oder Polypropylen, als faserförmiges oder faserbildendes, organisches polymeres Material (b1) einen Polyester oder ein Polyamid, als zur Ionenleitung befähigtes Copolymer (b2) ein Polyetheresteramid oder einen Polyetherester und als anorganisches Salz einer Protonensäure (b3) NaClO₄, KPF₆ oder LiCF₃SO₃.

Das thermoplastische oder elastomere polymere Substrat wie auch das faserförmige oder beim Mischen faserbildende polymere Material kann weitere Additive enthalten. Diese weiteren Additive gehören vor allem zur Gruppe der Antioxidantien, UV-Absorber und/oder Lichtschutzmitteln. Die thermische Stabilisierung umfasst dabei sowohl die Verarbeitung wie auch den Gebrauch (Langzeitstabilität). Diese weiteren Additive sind dem Fachmann bekannt und zum überwiegenden Teil kommerziell erhältlich.
Handelt es sich um antistatische halogenhaltige Polymere, wie oben beschrieben, so enthalten diese zweckmässig zusätzlich mindestens eine anorganische Zink-, Barium-, Cadmium-, Aluminium-, Calcium-, Magnesium- oder Seltenerd-Verbindung, wie beispielsweise Zinkoxid, hydroxid, -chlorid, -sulfid oder überbasische Zinkoxid/hydroxid Additionsverbindungen, oder eine organische Zink-, Barium-, Cadmium-, Aluminium-, Calcium-, Magnesium- oder Seltenerd-Verbindung aus der Reihe der aliphatischen gesättigten C₂-C₂₂-Carboxylate, der aliphatischen ungesättigten C₃-C₂₂-Carboxylate, der aliphatischen C₂-C₂₂-Carboxylate, die mit wenigstens einer OH-Gruppe substituiert sind oder deren Kette wenigstens durch ein O-Atom unterbrochen ist (Oxasäuren), der cyclischen und bicyclischen Carboxylate mit 5-22 C-Atomen, der unsubstituierten, mit wenigstens einer OH-Gruppe substituierten und/oder C₁-C₁₆-alkylsubstituierten Phenylcarboxylate, der unsubstituierten, mit wenigstens einer OH-Gruppe substituierten und/oder C₁-C₁₆alkylsubstituierten Naphthylcarboxylate, der Phenyl-C₁-C₁₆-alkylcarboxylate, der Naphthyl-C₁-C₁₆-alkylcarboxylate oder der gegebenenfalls mit C₁-C₁₂-Alkyl substituierten Phenolate.
Die genannten Metallverbindungen können dabei als Gemische unterschiedlicher Verbindungen vorliegen. Bevorzugt sind dabei sogenannte synergistische Metallseifenmischungen, beispielsweise der Metalle Ca und Zn oder Ba und Zn. Auch können organische Zink-, Barium-, Cadmium-, Aluminium-, Calcium-, Magnesium- oder Seltenerd-Verbindungen auf einen Hydrotalcit, Zeolith oder Dawsonit gecoatet sein; siehe hierzu auch DE-A-4031818.
Als Antioxidantien kommen beispielsweise in Betracht:
1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6(1'-methyl-tridec-1'yl)-phenol, Octylphenol, Nonylphenol und Mischungen davon.
2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
4. Hydroxylierte Thiodiphenylether, z.B. 2,2'-Thio-bis-(6-tert-butyl-4-methylphenol), 2,2'-Thiobis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.
5. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methyl-phenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methylphenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(4-hydroxyphenyl)-propan, 2,2-Bis-(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
6. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, lsooctyl-3.5-di-tert-butyl-4-hydroxybenzylmercaptoacetat.
7. Hydroxybenzylierte Malonate, z.B. Dioctadecyl-2,2-bis-(3,5-di-tert-butyl-2-hydroxybenzyl) malonat, Di-octadecyl-2-(3-tert-butyl-4-hydroxy-5-methylbenzyl)-malonat, Didodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.
8. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6--Tris-(3,5-di-tert-butyl-4-hydroxybenzyl)-phenol.
9. Triazinverbindungen, z.B. 2,4-Bis-octylmercapto-6-(3,5-di-tert-butyl-4-hydroxyanilino)-1,3,5-triazin, 2-Octylrnercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)- 1,3,5-triazin, 2,4,6-Tris-(3,5-ditert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.
10. Phosphonate, Phosphite und Phosphonite z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzylphosphonsäuremonoethylesters, Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis-(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor--2,4,8,10-tetra-tert-butyl-12-methyl-dibenz[d,g]-1,3,2-dioxaphosphocin, Bis-(2,4-di-tert-butyl-6-methylphenyl)-methylphosphit, Bis-(2,4-di-tert-butyl-6-methylphenyl)-ethylphosphit, (C₉H₁₉-C₆H₄)_{1.5}-P-(O-C₁₂₋₁₃H₂₅₋₂₇)_{1.5}.
11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
12. Ester der β-(3,5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis--(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo[2.2.2]-octan.
13. Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
14. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo[2.2.2]-octan.
15. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethytolpropan, 4-Hydroxymethyl-1-phospha-2,6,7-trioxabicyclo-[2.2.2]-octan.
16. Amide der β-(3,5-Di-tert-butyl-4-hydroxyphenyl)-propionsäure, wie z.B. N,N'-Bis-(3,5-ditert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.
17. Ester der Thiodiessigsäure und Thiodipropionsäure

Bevorzugt sind Antioxidantien der Gruppen 5, 10 und 14 insbesondere 2,2-Bis-(4-hydroxyphenyl)-propan, Ester der 3,5-Di-tert-butyl-4-hydroxyphenylpropionsäure mit Octadecanol oder Pentaerythrit oder Tris-(2,4-di-tert-butylphenyl)-phosphit.

Gegebenenfalls kann auch ein Gemisch von Antioxidantien unterschiedlicher Struktur eingesetzt werden.

Die Antioxidantien können in einer Menge von beispielsweise 0,01 bis 10, zweckmässig 0,1 bis 10 und insbesondere 0,1 bis 5 Gew.-Teilen, bezogen auf 100 Gew.-Teile Polymer, angewendet werden.

Als UV-Absorber und Lichtschutzmittel kommen beispielsweise in Betracht:
1. 2-(2'-Hydroxyphenyl)-benztriazole, wie z.B. 2-(2'-Hydroxy-5'-methylphenyl)-benztriazol, 2-(3',5'-Di-tert-butyl-2'-hydroxyphenyl)-benztriazol, 2-(5'-tert-Butyl-2'-hydroxyphenyl)-benztriazol, 2-(2'-Hydroxy-5'-(1,1,3,3-tetramethylbutyl)phenyl)-benztriazol, 2-(3',5'-Di-tert-butyl-2'hydroxyphenyl)-5-chlor-benztriazol, 2-(3'-tert-Butyl- 2'-hydroxy-5'-methylphenyl)-5-chlorbenztriazol, 2-(3'-sec-Butyl-5'-tert-butyl-2'-hydroxyphenyl)-benztriazol, 2-(2'-Hydroxy-4'octoxyphenyl)-benztriazol, 2-(3',5'-Di-tert-amyl-2'-hydroxyphenyl)-benztriazol, 2-(3',5'-Bis-(α,α-dimethylbenzyl)-2'-hydroxyphenyl)-benztriazol, Mischung aus 2-(3'-tert-Butyl-2'-hydroxy-5'-(2-octyloxycarbonylethyl)phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2'hydroxy-5'-(2-methoxycarbonylethyl)phenyl)-5-chlor-benztriazol, 2-(3'-tert-Butyl-2'-hydroxy-5'-(2-methoxycarbonylethyl)phenyl)-benztriazol, 2-{3'-tert-Butyl-2'-hydroxy-5'-{2-octyloxycarbonylethyl)phenyl)-benztriazol, 2-(3'-tert-Butyl-5'-[2-(2-ethythexyloxy)carbonylethyl ]-2'-hydroxyphenyl)-benztriazol, 2-(3'-Dodecyl-2'-hydroxy-5'-methylphenyl)-benztriazol, und 2-(3'-tert-Butyl-2'-hydroxy-5'-(2-isooctyloxycarbonylethyl)phenyl-benztriazol, 2,2'-Methylenbis[4-(1,1,3,3-tetramethylbutyl)-6-benztriazol-2-yl-phenol]; Umesterungsprodukt von 2-[3'-tert-Butyl-5'-(2-methoxycarbonylethyl)-2'-hydroxyphenyl]-benztriazol mit Polyethylenglycol 300; [R-CH₂CH₂-COO(CH₂)₃]- mit R = 3'-tert-Butyl-4'-hydroxy-5'-2H-benztriazol-2-yl-phenyl.
2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
4. Acrylate, wie z.B. α-Cyan-β,β-diphenylacrylsäure-ethytester bzw. -isooctylester, α-Carbomethoxy-zimtsäuremethylester, α-Cyano-β-methyl-p-methoxy-zimtsäuremethylester bzw. butylester, α-Carbomethoxy-p-methoxy-zimtsäure-methylester, N-(β-Carbomethoxy-β-cyanovinyl)-2-methyl-indolin.
5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl) hexamethylendiamin und 4-tert-Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5 ,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl--7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1 ,3,5-triazin, Kondensationsprodukt aus 2-Chlor-4,6-di-(4-nbutylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethytpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, sowie Chimassorb966.
7. Oxalsäurediamide, wie z.B. 4,4'-Di-octyloxy-oxanilid, 2,2'-Di-octyloxy-5,5'-di-tert-butyloxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.

Als peroxidzerstörende Verbindungen kommen beispielsweise in Betracht:
Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zinkdibutyl-dithiocarbamat, Dioctadecyldisulfid, Pentaerythrit-tetrakis-(β-dodecylmercapto) propionat oder Ethylenglykolbismercaptoacetat.

Ein weiterer Gegenstand der Erfindung ist ein antistatisches Gemisch (B), enthaltend (b1) ein im thermoplastischen oder elastomeren polymeren Substrat (A) nicht lösliches, faserförmiges oder beim Mischen faserbildendes, organisches polymeres Material, welches ausgewählt wird aus der Gruppe bestehend aus Polyacrylsäureester, Polymethacrylsäureester, Polyacrylnitril, Polyvinylalkohol, Polyvinylacetat, Polyamid, Polyurethan und Polyester; (b2) ein zur Ionenleitung befähigtes Polymer oder Copolymer, welches komplexierende oder solvatisierende Blöcke für ein Salz einer anorganischen oder niedermolekularen organischen Protonensäure (b3) aufweist, und eine bessere Kompatibilität zum faserförmigen oder beim Mischen faserbildenden organischen Polymeren (b1) als zum polymeren organischen Substrat (A) besitzt und welches ausgewählt wird aus der Gruppe bestehend aus oligoethoxyliertem Acrylat oder Methacrylat, in para Stellung oligoethoxyliertem Styrol, Polyetherurethan, Polyetherharnstoff, Polyetheramid, Polyetheresteramid und Polyetherester; und (b3) ein Salz einer anorganischen oder niedermolekularen organischen Protonensäure, welches im Polymeren oder Copolymeren (b2) komplexiert oder solvatisiert ist und ausgewählt wird aus der Gruppe bestehend aus LiClO₄, LiCF₃SO₃, NaClO₄, LiBF₄, NaBF₄, KBF₄, NaCF₃SO₃, KClO₄, KPF₆, KCF₃SO₃, KC₄F₉SO₃, Ca(ClO₄)₂, Ca(PF₆)₂, Mg(ClO₄)₂, Mg(CF₃SO₃)₂, Zn(ClO₄)₂, Zn(PF₆)₂ und Ca(CF₃SO₃)₂.

Für das faserförmige oder beim Mischen faserbildende organische polymere Material (b1), das zur Ionenleitung befähigte Polymer oder Copolymer (b2) und das Salz einer anorganischen oder niedermolekularen organischen Protonensäure (b3) gelten die vorstehend genannten Definitionen und Bevorzugungen. Ebenso kann dieses Gemisch die zuvor beschriebenen weiteren Bestandteile enthalten.

Neben dem erfindungsgemässen antistatischen Gemisch können noch weitere bekannte antistatisch wirksame Verbindungen enthalten sein. Solche Antistatika sind in grosser Zahl bekannt und zum Beispiel in Kunststoffe 67 (1977) 3, Seiten 154-159 beschrieben.

Es kann sich dabei beispielsweise um Polyoxyalkylenverbindungen handeln. Beispiele sind Polypropylenglykollaurylester, Polypropylenglykololeylether, Polypropylenglykolmethyldiethylammoniumchlorid, Polyethylenglykolmonomethylether, Polyethylenglykoldimethylether, Polyethylenglykollaurylester, Polyethylenglykololeylester, Polyethylenglykololeylether, Polyethylenglykolsorbitanmonolaurylester, Polyethylenglykolstearylester, Polyethylenglykolpolypropylenglykollaurylether, Polyethylenglykollaurylethercarbonsäure Polyethylenglykoldiacrylat,-mono und -triacrylat oder Polyethylenglykoldimethacrylat, -monomethacrylat und -trimethacrylat.

Setzt man eine olefinisch ungesättigte Verbindung ein, so kann man diese auf der Faser polymerisieren oder vernetzen.

Ebenfalls Gegenstand der Erfindung ist ein Verfahren zur Herstellung eines antistatisch ausgerüsteten thermoplastischen oder elastomeren polymeren Substrats (A), dadurch gekennzeichnet, dass man ein antistatisches Gemisch (B) enthaltend
(b1) ein im thermoplastischen oder elastomeren polymeren Substrat (A) nicht lösliches, faserförmiges oder beim Mischen faserbildendes, organisches polymeres Material, welches ausgewählt wird aus der Gruppe bestehend aus Polyacrylsäureester, Polymethacrylsäureester, Polyacrylnitril, Polyvinylalkohol, Polyvinylacetat, Polyamid, Polyurethan und Polyester;
(b2) ein zur Ionenleitung befähigtes Polymer oder Copolymer, welches komplexierende oder solvatisierende Blöcke für ein Salz einer anorganischen oder niedermolekularen organischen Protonensäure (b3) aufweist, und eine bessere Kompatibilität zum faserförmigen oder beim Mischen faserbildenden organischen Polymeren (b1) als zum polymeren organischen Substrat (A) besitzt und welches ausgewählt wird aus der Gruppe bestehend aus oligoethoxyliertem Acrylat oder Methacrylat, in para Stellung oligoethoxyliertem Styrol, Polyetherurethan, Polyetherharnstoff, Polyetheramid, Polyetheresteramid und Polyetherester; und
(b3) ein Salz einer anorganischen oder niedermolekularen organischen Protonensäure, welches im Polymeren oder Copolymeren (b2) komplexiert oder solvatisiert ist und ausgewählt wird aus der Gruppe bestehend aus LiClO₄, LiCF₃SO₃, NaClO₄, LiBF₄, NaBF₄, KBF₄, NaCF₃SO₃, KClO₄, KPF₆, KCF₃SO₃, KC₄F₉SO₃, Ca(ClO₄)₂, Ca(PF₆)₂, Mg(ClO₄)₂, Mg(CF₃SO₃)₂, Zn(ClO₄)₂, Zn(PF₆)₂ und Ca(CF₃SO₃)₂,
als solches oder in Form seiner einzelnen Bestandteile in beliebiger Reihenfolge und gegebenenfalls weiterer Zusätze mit einem thermoplastischen oder elastomeren Polymeren (A) mischt, wobei die vorhandenen oder sich bildenden Fasern sich untereinander berühren.

Die Herstellung kann auf an sich bekannte Weise erfolgen, indem man unter Verwendung an sich bekannter Vorrichtungen, wie Kalander, Mischer, Kneter, Extruder und dergleichen, die genannten Bestandteile und gegebenenfalls weitere Zusätze mit dem Polymer vermischt. Die Additive können dabei einzeln oder in Mischung miteinander zugegeben werden. Es ist auch möglich, sogenannte Masterbatches einzusetzen.

Ein nach vorliegender Erfindung erhältliches antistatisch-ausgerüstetes thermoplastisches Polymer kann auf bekannte Weisen in die gewünschte Form gebracht werden. Solche Verfahren sind beispielsweise Mahlen, Kalandrieren, Extrudieren, Spritzgiessen, Sintern, Press/Sintern oder Spinnen, ferner Extrusions-Blasen oder eine Verarbeitung nach dem Plastisol-Verfahren. Das antistatisch-ausgerüstete thermoplastische Polymer kann auch zu Schaumstoffen verarbeitet werden.

Ein weiterer Gegenstand der Erfindung ist die Verwendung eines erfindungsgemässen antistatischen Gemischs zur antistatischen Ausrüstung von thermoplastischen oder elastomeren Polymeren.
Die erfindungsgemässe Polymerzusammensetzung eignet sich besonders für Drahtummantelungen und Kabelisolierungen. Es können aber auch Dekorationsfolien, Schaumstoffe, Agrarfolien, Schläuche, Dichtungsprofile und Bürofolien hergestellt werden.
Die erfindungsgemässen Polymerzusammensetzungen können auch als Formmassen zur Herstellung von Hohlkörpern (Flaschen), Verpackungsfolien (Tiefziehfolien), Blasfolien, Crash pad-Folien (Automobile), Rohren, Schaumstoffen, Schwerprofilen (Fensterrahmen), Lichtwandprofilen, Bauprofilen, Sidings, Fittings, Bürofolien und Apparatur-Gehäusen (Computer, Haushaltsgeräte) verwendet werden.

Die folgenden Beispiele erläutern die Erfindung.

### Beispiel 1. Herstellung von antistatischem Hart-PVC

60 g Hart-PVC nach DIN 53774, Vinnol® der Fa. Wacker Chemie, 2,1 g Polyetheresteramid, (Pelestat® 7490, der Fa. Sanyo Chemicals) mit 3 Gew.- % NaClO₄·H₂O versetzt und 4,0 g Polyamid 6,6-Flockfasern (Länge 1,5 mm, 2,2 dtex) werden mit dem Spatel vermischt und diese Mischung auf einem Zwei-Walzen-Kalander bei 190 °C (Walzzeit 5 Minuten, Drehzahl 26/33 U/min, Spalt 0,5 mm) zu einem Walzfell verarbeitet. Aus diesem Walzfell werden anschliessend in einer geheizten Hochdruckpresse Pressplatten hergestellt (Dicke 0,5 mm, Heiztemperatur 195 °C, Heizzeit 5 Minuten). Abgekühlt wird die Pressplatte während 5 Minuten mittels Wasserkühlung. Sofort nach Herstellung gemessene Pressplatten haben einen Durchgangswiderstand R_{D} (gemessen nach DIN 53482 mit einer Schutzringelektrode 20 cm², Spalt 5 mm, nach 5 Minuten bei 500 Volt) von 4,5·10¹⁰ Ω, der nach 14 tägiger Lagerung an der Luft (50 % r.F.) auf 2,0·10⁹ Ω fällt. Der Oberflächenwiderstand R_{O} (gemessen mit gleicher Schutzringelektrode) beträgt nach der Herstellung 6,0·10¹⁰ Ω, nach 14 tägiger Lagerung (50 % r.F.) an der Luft 5,0·10⁹ Ω.

### Beispiel 2. Herstellung von antistatischem Weich-PVC

50 g Weich-PVC ,100 Teile EVIPOL® SH 7020, 48 Teile Dioctylphthalat, 2 Teile epoxidiertes Sojabohnenöl (Reoplast® 39), 2 Teile BZ 561, 0,15 g Polyetheresteramid, (Pelestat® 7490 der Fa. Sanyo Chemicals) mit 3 Gew.-% NaClO₄·H₂O versetzt und 4,5 g Polyamid 6,6-Flockfasern (Länge 1,5 mm, 2,2 dtex) werden mit dem Spatel vermischt und diese Mischung auf einem Zwei-Walzen-Kalander bei 180 °C (Walzzeit 5 Minuten, Drehzahl 22/26 U/min, Spalt 0,5 mm) zu einem Walzfell verarbeitet. Sofort nach Herstellung zeigt das Walzfell einen Durchgangswiderstand R_{D} (gemessen nach DIN 53482 mit einer Schutzringelektrode 20 cm², Spalt 5 mm, nach 5 Minuten bei 500 Volt) von 3·10¹⁰ Ω, der nach 14 tägiger Lagerung an der Luft (50 % r.F.) auf 3·10⁹ Ω fällt. Der Oberflächenwiderstand R_{O} (gemessen mit gleicher Schutzringelektrode) beträgt nach der Herstellung 3·10¹¹ Ω, nach 14 tägiger Lagerung (50 % r.F.) an der Luft 2·10¹⁰ Ω.

### Beispiel 3. Herstellung von antistatischem Polypropylen

194 g Polypropylen (Moplen® FLF 20, stabilisiert), 2,88 g Polyetheresteramid (Pelestat® 6321 Pulver der Fa. Sanyo Chemicals), 3,00 g Polyamid 6 Flockfasern (1,8 mm, 11,0 dtex) und 0,12 g NaClO₄·H₂O werden im Mixer während 3 Minuten gemischt und nachher mittels Einschneckenextruder (BRABENDER 25 D) bei 230 °C extrudiert und anschliessend granuliert. Pressplatten, welche bei 200 °C und 300 bar hergestellt wurden, zeigten nach Abkühlen mittels Wasserkühlung und 2 tägiger Lagerung (60 % r.F.) einen Durchgangswiderstand R_{D} (gemessen nach DIN 53482 mit einer Schutzringelektrode 20 cm², Spalt 5 mm, nach 5 Minuten bei 500 Volt) von 5,5·10⁹ Ω und einen Oberflächenwiderstand R_{O} (gemessen mit gleicher Schutzringelektrode) von 4,0·10¹⁰ Ω.

### Beispiel 4, Herstellung eines antistatischen Gemischs in Form beschichteter Fasern

3,33 g Polyetheresteramid (Pelestat® 7490 der Fa. Sanyo Chemicals) werden in 160 g Methanol gelöst. Dazu werden 13,33 g Polyamid-6-Fasem (Länge 1,8mm, 11 dtex), sowie eine Lösung bestehend aus 3,20 g Polyethylenglykol-600-dimethacrylat und 0,13 g NaClO₄·H₂O zugegeben. Das Methanol wird bei 40 °C und Vakuum von ca. 10 mbar abgedampft. Die beschichteten Fasern werden dann bei 40 °C und 0,7 mbar während 5 Stunden getrocknet.

### Beispiel 5. Antistatische Ausrüstung von Polypropylen

Polypropylen und das in Beispiel 4 beschriebene antistatische Gemisch in Form beschichteter Fasern werden in verschiedenen Verhältnissen miteinander gemischt. Die Mischungen werden in einem Einschneckenextruder (Brabender 25 D) extrudiert. Die Massentemperatur bei der Düse beträgt ca. 236 °C. Das extrudierte Polypropylen wird granuliert und bei 200 °C zu Platten verpresst. Der laterale Schichtwiderstand R_{O} (DIN 53482) dieser Platten, mit einer Dicke von je 0,57 mm, wird bei 22 °C und 50 % r.F. mit einer Federzungenelektrode gemessen. Die Mischungsverhältnisse und Messergebnisse sind in Tabelle 1 dargestellt.

**Tabelle 1**

| Beispiel | Polypropylen [Teile] | beschichtete Fasern [Teile] | R_{O} [Ohm] |
|---|---|---|---|
| Referenz | 100 | 0 | 4×10¹⁵ |
| 5a | 98 | 2 | 4,1×10¹² |
| 5b | 97 | 3 | 1,5×10¹¹ |
| 5c | 96 | 4 | 3,5×10¹⁰ |
| 5d | 95 | 5 | 6,4×10⁹ |

### Beispiel 6, Herstellung eines antistatischen Gemischs in Form eines Polymerblends

50 g Polyamid-6,6-Pulver, 49 g Poly(etheresteramid) (Pelestat® 7490, der Fa. Sanyo Chemicals) und 1.0 g NaClO₄·H₂O werden zusammen gemischt. Die Mischung wird in einem Einschneckenextruder (Brabender 25 D) extrudiert. Die Massentemperatur bei der Düse beträgt ca. 239 °C. Das Polymerblend wird granuliert und anschliessend während 30 Minuten bei 70 °C getrocknet. Das Granulat besteht aus faserförmigen, kristallinen und amorphen Bereichen.

### Beispiel 7, Antistatische Ausrüstung von Hart-PVC

55,2 g Hart-PVC und 4,8 g des in Beispiel 6 beschrieben antistatischen Gemischs in Form eines Polymerblends werden miteinander gemischt. Die Mischung wird auf dem 2-Walzenstuhl, bei Walzentemperaturen von 197 (vorne) resp. 193 °C (hinten) während 5 Minuten gemischt. Das erhaltene Walzfell wir bei 195 °C zu einer Platte verpresst. Der laterale Schichtwiderstand R_{O} dieser Platte mit einer Dicke von 0,6 mm wird bei 22 °C und 50 % r.F. mit einer Federzungenelektrode gemessen, er beträgt 1×10¹¹ Ohm.

### Beispiel 8, Herstellung von antistatischem HD-Polyethylen

55,8 g HD-PE Hostalen® GF 7660 (Hoechst), 0,6 g Polyetheresteramid (Pebax® MH 1657 der Fa.Elf-Atochem S.A.) mit 5 Gew.% NaClO₄^{·}H₂O versetzt und 3,6 g Polyamid 6.6-Flockfasern (Länge 0,6 mm, 0,9 dtex) werden mit dem Spatel vermischt und diese Mischung auf einem Zwei-Walzen-Kalander bei 175°C (Walzzeit 5 Minuten, Drehzahl 22/26 U/min, Spalt 0,5mm) zu einem Walzfell verarbeitet. Aus diesem werden anschliessend in einer geheizten Hochdruckpresse Pressplatten von 0,5 mm Dicke hergestellt (Heiztemperatur 180°C,Heizzeit 5 Minuten). Abgekühlt werden die Pressplatten in einer zweiten, wassergekühlten Presse (5 Minuten) unter Druck. Einen Tag nach Herstellung zeigen die Platten bei 20% r.F. einen Durchgangswiderstand R_{D} (gemessen mit der Schutzringelektrode nach DIN 53482, 20 cm², Spalt 5mm, nach 5 Minuten bei 500 Volt) von 1^{·}10¹⁰ Ohm, der nach einwöchiger Lagerung an Luft bei ca. 40% r.F. auf 3^{·}10⁹ Ohm fällt. Der Oberflächenwiderstand R_{O} (gemessen mit gleicher Schutzringelektrode) beträgt 1,2^{·}10¹¹Ohm (20% r.F.) bzw. 5^{·}10¹⁰ Ohm ( ca. 40 % r.F., nach einer Woche). Die Platten sind weiss-opak.

### Beispiel 9, Herstellung von antistatischem HD-Polyethylen

55,2 g HD-PE Hostalen® GF 7660 (Hoechst), 1,2 g Polyetheresteramid (Pebax® MH 1657 der Fa. Elf-Atochem S.A.) mit 5 Gew% NaClO₄^{·}H₂O versetzt und 3,6 g Aramidfaser Typ F AR 700/75 (der Fa. Schwarzwälder Textilwerke, D-7771 Schenkenzell) werden mit dem Spatel vermischt und diese Mischung auf einem Zwei-Walzen-Kalander bei 160°C (5 Minuten Walzzeit, Drehzahl 28/36 U/min, Spalt 0,5 mm) zu einem Walzfell verarbeitet. Aus diesem werden in einer geheizten Hochdruckpresse Pressplatten von 0,5 mm Dicke (Heiztemperatur 180°C, Heizzeit 5 Min.) hergestellt. Abgekühlt werden diese in einer zweiten, wassergekühlten Presse unter Druck ( 5 min.) Kurz nach der Herstellung zeigt eine Platte bei 20% r.F. einen Durchgangswiderstand R_{D} ( gemessen mit der Schutzring-Elektrode nach DIN 53482, 20 cm², Spalt 5 mm, nach 5 Minuten bei 500 Volt) von 2,5·10⁹ Ohm, der nach einwöchiger Lagerung bei 50 % r.F. auf 1,3^{·}10⁹ Ohm fällt. Der Oberflächenwiderstand R_{O} beträgt 2,3^{·}10¹⁰ Ohm ( bei 20 % r.F), nach einwöchiger Lagerung an Luft (50 % r.F.) 1,0^{·}10¹⁰ Ohm. Die Platte ist gelblich-opak, bedingt durch die gelbe Aramidfaser.

### Beispiel 10, Herstellung von antistatischem HD-Polyethylen

55,8 g HD-PE Hostalen® GF 7660 (Hoechst), 0,6 g Polyetheresteramid ( Pelestat® 6321 der Fa. Sanyo Chemicals) versetzt mit 10 Gew% NaClO₄^{·}H₂O versetzt und 3,6 g Polyamid 6-Flockfasern ( Länge 1,8 mm, 11 dtex) werden mit einem Spatel vermischt und diese Mischung auf einem Zwei-Walzen-Kalander bei 160°C ( 8 min. Walzzeit, Drehzahl 22/26 U / min, Spalt 0,5 mm) zu einem Walzfell verarbeitet. Aus diesem wird ein einer geheizten Hochdruckpresse eine Pressplatte von 0,5mm Dicke (Heizzeit 5 min. bei 165°C) hergestellt. Abgekühlt wird diese Platte mit einer zweiten, wassergekühlten Presse unter Druck (5 min.) Einen Tag nach der Herstellung beträgt der Durchgangswiderstand R_{D} dieser Platte ( gemessen nach DIN 53482 mit der Schutzringelektrode) 2^{·}10¹² Ohm (20% r.F.), nach viermonatiger Lagerung an Luft 4^{·}10¹⁰ Ohm ( 48% r.F.). Der Oberflächenwiderstand R_{O} nach Herstellung ist 2^{·}10¹³ Ohm ( 20% r.F.), nach viermonatiger Lagerung an der Luft 2^{·}10¹² Ohm ( 48 % r.F.)

### Beispiel 11, Herstellung von antistatischem Styrol-Butadien-Blockcopolymer

55,9 g SB-Blockcopolymer (Styrolux® RE 31, BASF), 0,48 g Polyetheresteramid (Pebax® MH 1657, Fa. Elf-Atochem S.A.) mit 5 Gew% NaClO₄^{·}H₂O versetzt, und 3,6 g Polyamid 66-Flockfasern (Länge 0,6 mm, 0,9 dtex) werden mit einem Spatel vermischt und diese Mischung auf einem Zwei-Walzen-Kalander bei 190°C ( Walzzeit 5 min.,Drehzahl 26/32 U/min, Spalt 0,5 mm) verarbeitet. Aus der erhaltenen, homogenen Masse wird in einer geheizten Hochdruckpresse eine Pressplatte von 0,5 mm Dicke ( Heizzeit 5 min. bei 195°C) hergestellt. Abgekühlt wird diese in einer zweiten, wassergekühlten Presse unter Druck (5 min.). Kurz nach Herstellung der Platte zeigt diese einen Durchgangswiderstand R_{D} von 2^{·}10¹¹ Ohm und einen Oberflächenwiderstand Rₒ von 4^{·}10¹¹ Ohm ( bei 20% r.F.). Nach einem Tag Lagerung an der Luft beträgt der Durchgangswiderstand R_{D} 3^{·}10¹⁰ Ohm und der Oberflächenwiderstand R_{O} 8^{·}10¹⁰ Ohm (48 % r.F.). Gemessen wird mit der Schutzringelektrode nach DIN 53482 (20 cm², Spalt 5 mm, nach 5 min. bei 500 Volt).

### Beispiel 12, Herstellung von antistatischem PPE/PA-Blend

55,2 g PPE/PA-Blend (Hamamatsu-CHO, Japan), 1,2 g Polyetheresteramid (Pebax® MH 1657 der Fa. Elf-Atochem S.A.) mit 5 Gew% NaClO₄·H₂O versetzt und 3,6 g Polyamid 66-Flockfasern (Länge 0,6 mm, 0,9 dtex) werden mit einem Spatel vermischt und diese Mischung auf einem Zwei-Walzen-Kalander bei 230°C (Walzzeit 5 min., Drehzahl 22/26 U/min., Spalt 0,5 mm) verarbeitet. Aus der erhaltenen Masse wird in einer geheizten Hochdruckpresse eine Pressplatte von 0,5 mm Dicke (Heizzeit 5 min. bei 235°C) hergestellt. Abgekühlt wird diese in einer zweiten, wassergekühlten Presse unter Druck (5 min.). Einen Tag nach der Herstellung der Platte zeigt diese bei 20 % r.F. einen Durchgangswiderstand R_{D} von 1,6^{·}10¹² Ohm, nach einwöchiger Lagerung an Luft (50%r.F.) 6^{·}10¹¹ Ohm. Die Werte für den Oberflächenwiderstand R_{O} betragen 7^{·}10¹² Ohm (20% r.F.) und 4^{·}10¹² Ohm (50% r.F.). Gemessen wird mit der Schutzringelektrode nach DIN 53482.

### Beispiel 13, Herstellung von antistatischem Hart-PVC

60 g Hart-PVC ( Evipol® SH 7020 stabil., Fa. EVC European Vinyls Corporation AG), 1,4 g Polyetheresteramid (Pelestat® 7490 der Fa. Sanyo Chemicals) mit 10% NaClO₄^{·}H₂O versetzt und 4,0 g Aramidfaser Typ F AR 700/40 ( Fa. Schwarzwälder Textilwerke D-7771 Schenkenzell ) werden mit einem Spatel vermischt und auf einem Zwei-Walzen-Kalander zu einem Walzfell verarbeitet (Walzzeit 5 min. bei 190°C, Drehzahl 22/26 U/min., Spalt 0,5 mm). Aus diesem werden mit einer geheizten Hochdruckpresse Pressplatten von 0,5 mm Dicke hergestellt (Heizzeit 5 min. bei 195°C). Abkühlung der Platten unter Druck mit einer zweiten, wassergekühlten Presse (5 min.). Eine Pressplatte zeigt kurz nach der Herstellung einen Durchgangswiderstand R_{D} von 1,3^{·}10¹² Ohm und einen Oberflächenwiderstand R_{O} von 2^{·}10¹² Ohm (55 % r.F.). Nach einer Woche Lagerung an der Luft beträgt der R_{D} 2^{·}10¹¹ Ohm und R_{O} 4^{·}10¹¹ Ohm ( ca .55% r.F.). Gemessen wird mit der Schutzringelektrode nach DIN 53482. Die Platten sind gelblich, bedingt durch die eingesetzte gelbe Aramidfaser.

### Beispiel 14, Herstellung von antistatischem ABS

54 g ABS Cycolac® TCA (GEP), 3 g Polyetheresteramid (Pelestat® 7490 der Fa. Sanyo Chemicals, Japan) mit 10 Gew% LiCF₃SO₃ versetzt und 3 g Polyamid 6.6-Flockfasern (Länge 2 mm, 1,7 dtex) werden mit einem Spatel vermischt und auf einem Zwei-Walzen-Kalander zu einem Walzfell verarbeitet ( Walzzeit 5 min. bei 170°C, Drehzahl 22/26 U/min.,Spalt 0,5 mm). Aus diesem wird in einer geheizten Hochdruckpresse eine Pressplatte von 0,5 mm Dicke hergestellt (Heizzeit 5 min. bei 175°C). Abgekühlt wird in einer zweiten, wassergekühlten Presse unter Druck ( 5 min.). Unmittelbar nach der Herstellung wird bei 20 % r.F. die Leitfähigkeit mit einer Schutzringelektrode nach DIN 53482 festgestellt : Durchgangswiderstand R_{D} 3,2^{·}10¹⁰ Ohm, Oberflächenwiderstand R_{O}7,4^{·}10¹⁰ Ohm. Nach einer Woche Lagerung an Luft ( ca. 55 % r.F.) beträgt R_{D} 3,1^{·}10⁹ Ohm und R_{O} 1,3^{·}10¹⁰ Ohm.

### Beispiel 15, Herstellung von antistatischem ABS

54 g ABS Cycolac® TCA (GEP), 2.4 g Polyetheresteramid (Pebax® MH 1657 der Fa. Elf-Atochem S.A.) mit 5 Gew% NaClO₄^{·}H₂O versetzt und 3,6 g Aramidfaser Typ F AR 700/075 (der Fa. Schwarzwälder Textilwerke, D-7771 Schenkenzell) werden mit einem Spatel vermischt und zu einem Walzfell verarbeitet (Walzzeit 5 min. bei 175°C, Drehzahl 28/36 U/min.,Spalt 0,5 mm). Aus diesem wird mit einer geheizten Hochdruckpresse eine Pressplatte von 0,5 mm Dicke hergestellt ( Heizzeit 5 min. bei 185°C). Mit einer zweiten, wassergekühlten Presse wird diese unter Druck 5 min. abgekühlt. Unmittelbar nach der Herstellung wird bei 20 % r. F. die Leitfähigkeit mit einer Schutzringelektrode nach DIN 53482 festgestellt: Durchgangswiderstand R_{D} 4^{·}10¹⁰ Ohm, Oberflächenwiderstand R_{O} 3^{·}10¹¹ Ohm. Nach einwöchiger Lagerung an Luft (50% r.F.) beträgt R_{D} 2,6 ^{·} 10¹⁰Ohm und R_{O} 2,7^{·}10¹⁰ Ohm. Die Platte ist gelblich, bedingt durch die gelbe Aramidfaser.

### Beispiel 16, Herstellung von antistatischem LLD-Polyethylen

54,6 g LLD-PE Dowlex® 2045 E (DOW Chemicals), 1,8 g Polyetheresteramid (Pebax® MH 1657 der Fa. Elf-Atochem S.A.) mit 5 Gew% NaClO₄^{·}H₂O versetzt und 3,6 g Polyamid 6.6-Flockfasern (Länge 0,6 mm, 0,9 dtex) werden mit einem Spatel vermischt und auf einem Zwei-Walzen-Kalander zu einem Walzfell verarbeitet (Walzzeit 5min. bei 180°C, Drehzahl 22/26 U/min., Spalt 0,5 mm). Aus diesem wird in einer geheizten Hochdruckpresse eine Pressplatte von 0,5 mm Dicke hergestellt ( Heizzeit 5 min. bei 190°C). Abkühlung der Platte unter Druck mit einer zweiten, wassergekühlten Presse (5 min.). Die Pressplatte zeigt nach dreitägiger Lagerung unter 20% r.F. einen Durchgangswiderstand R_{D} von 2^{·}10⁹ Ohm und einen Oberflächenwiderstand R_{O} von 1,3^{·}10¹⁰ Ohm. Nach einwöchiger Lagerung an Luft bei 50 % r. F. beträgt R_{D} 7^{·}10⁸ Ohm und R_{O} 4^{·}10⁹Ohm. Gemessen wird mit der Schutzringelektrode nach DIN 53482.

### Beispiel 17, Herstellung von antistatischem Polypropylen

192 g Polypropylen (Profax® 6501, stabilisiert), 3,84 g Polyetheresteramid (Pelestat® 6321 der Fa. Sanyo Chemicals, Japan), 4,00 g Polyamid 6 Flockfasern (1,8 mm, 11,0 dtex) und 0,16 g NaClO₄·H₂O wurden im Mixer während 2 Minuten gemischt und nachher mittels Einschneck-Extruder (BRABENDER 25 D) bei 285 °C extrudiert und anschliessend granuliert. Pressplatten, welche bei 260 °C und 300 bar hergestellt wurden, zeigten nach Abkühlen mittels Wasserkühlung und 8 tägiger Lagerung (58 % r.F., 23 °C) einen Durchgangswiderstand R_{D} (gemessen nach DIN 53482 mit einer Schutzringelektrode 20 cm², Spalt 5 mm, nach 5 Minuten bei 500 Volt) von 1,9^{·}10¹⁰ Ω und einen Oberflächenwiderstand R_{O} (gemessen mit gleicher Schutzringelektrode) von 1,7^{·}10¹² Ω.

### Beispiel 18, Herstellung von antistatischem Polypropylen

190 g Polypropylen (Profax® 6501, stabilisiert), 4,80 g Polyetheresteramid (Pebax® MH 1657 Pulver, Elf Atochem, Frankreich), 5,00 g Polyamid 66 Pulver (Ultramid® AS 2500S) und 0,2 g NaClO₄·H₂O wurden im Mixer während 3 Minuten gemischt und nachher mittels Einschneck-Extruder (BRABENDER 25 D) bei 245 °C extrudiert und anschliessend granuliert. Pressplatten, welche bei 200 °C und 300 bar hergestellt wurden, zeigten nach Abkühlen mittels Wasserkühlung und 2 tägiger Lagerung (51 % r.F., 23 °C) einen Durchgangswiderstand R_{D} (gemessen nach DIN 53482 mit einer Schutzringelektrode 20 cm², Spalt 5 mm, nach 5 Minuten bei 500 Volt) von 1,1·10¹⁰ Ω und einen Oberflächenwiderstand R_{O} (gemessen mit gleicher Schutzringelektrode) von 7,7·10¹⁰ Ω.

### Beispiel 19, Herstellung von antistatischem Polystyrol

191,8 g Polystyrol (Polystyrol 168 N, BASF), 3,84 g Poly(ether-ester-amid) (Pelestat® 6321 Pulver, Sanyo Chemicals, Japan), 4,00 g Polyamid 6-Flockfasern ( Länge 1,8 mm, 11 dtex), 0,16 g NaClO₄·H₂O und 0.20 g lrganox® 900 FF (Ciba Specialty Chemicals) wurden im Mixer während 3 Minuten gemischt und nachher mittels Einschneck-Extruder (BRABENDER 25 D) bei 210 °C extrudiert und anschliessend granuliert. Pressplatten, welche bei 200 °C und 300 bar hergestellt wurden, zeigten nach Abkühlen mittels Wasserkühlung und 2 tägiger Lagerung (40 % r.F., 23 °C) einen Durchgangswiderstand R_{D} (gemessen nach DIN 53482 mit einer Schutzringelektrode 20 cm², Spalt 5 mm, nach 5 Minuten bei 500 Volt) von 8,7^{·}10¹¹ Ω und einen Oberflächenwiderstand R_{O} (gemessen mit gleicher Schutzringelektrode) von 3,2·10¹¹Ω.

### Beispiel 20, Herstellung von antistatischem Polystyrol

189,8 g Polystyrol (Polystyrol 168 N, BASF), 4,80 g Poly(ether-ester-amid) (Pelestat® 6321 der Fa Sanyo Chemicals, Japan), 5,00 g Polyamid 66 Pulver (Ultramid® AS 2500S), 0,20 g NaClO₄·H₂O und 0,20 g Irganox® 900 FF (Ciba Specialty Chemicals) wurden im Mixer während 3 Minuten gemischt und nachher mittels Einschneck-Extruder (BRABENDER 25 D) bei 235 °C extrudiert und anschliessend granuliert. Pressplatten, welche bei 230 °C und 300 bar hergestellt wurden, zeigten nach Abkühlen mittels Wasserkühlung und 2 tägiger Lagerung (48 % r.F., 23 °C) einen Durchgangswiderstand R_{D} (gemessen nach DIN 53482 mit einer Schutzringelektrode 20 cm², Spalt 5 mm, nach 5 Minuten bei 500 Volt) von 93,2·10¹⁰ Ω und einen Oberflächenwiderstand R_{O} (gemessen mit gleicher Schutzringelektrode) von 9,2·10¹⁰ Ω.

## Patentansprüche

1. Zusammensetzung, enthaltend ein thermoplastisches oder elastomeres polymeres Substrat (A) und ein antistatisches Gemisch (B) in Form sich berührender Fasern, welches (b1) ein im thermoplastischen oder elastomeren polymeren Substrat (A) nicht lösliches, faserförmiges oder beim Mischen faserbildendes, organisches polymeres Material ist und ausgewählt wird aus der Gruppe bestehend aus Polyacrylsäureester, Polymethacrylsäureester, Polyacrylnitril, Polyvinylalkohol, Polyvinylacetat, Polyamid, Polyurethan und Polyester; (b2) ein zur Ionenleitung befähigtes Polymer oder Copolymer, welches komplexierende oder solvatisierende Blöcke für ein Salz einer anorganischen oder niedermolekularen organischen Protonensäure (b3) aufweist, und eine bessere Kompatibilität zum faserförmigen oder beim Mischen faserbildenden organischen Polymeren (b1) als zum polymeren organischen Substrat (A) besitzt und welches ausgewählt wird aus der Gruppe bestehend aus oligoethoxyliertem Acrylat oder Methacrylat, in para Stellung oligoethoxyliertem Styrol, Polyetherurethan, Polyetherharnstoff, Polyetheramid, Polyetheresteramid und Polyetherester; und (b3) ein Salz einer anorganischen oder niedermolekularen organischen Protonensäure, welches im Polymeren oder Copolymeren (b2) komplexiert oder solvatisiert ist und ausgewählt wird aus der Gruppe bestehend aus LiClO₄, LiCF₃SO₃, NaClO₄, LiBF₄, NaBF₄, KBF₄, NaCF₃SO₃, KClO₄, KPF₆, KCF₃SO₃, KC₄F₉SO₃, Ca(ClO₄)₂, Ca(PF₆)₂, Mg(ClO₄)₂, Mg(CF₃SO₃)₂, Zn(ClO₄)₂, Zn(PF₆)₂ und Ca(CF₃SO₃)₂ ; enthält.

2. Zusammensetzung nach Anspruch 1, worin die Komponente (A) ein Polyolefin, Polystyrol, Copolymeres aus Acrylnitril-Butadien-Styrol (ABS), Polymeres aus α, β-ungesättigten Säuren, halogenhaltiges Polymeres, Homo- und Copolymeres von cyclischen Ethern, Polymeres von ungesättigten Alkoholen und Aminen, Polyacetal, Polyphenylenoxid, Polyurethan, Polyamid, Polyester, Polyharnstoff, Polycarbonat, Polysulfon oder Naturkautschuk ist.

3. Zusammensetzung nach Anspruch 2, worin die Komponente (A) ein Polyolefin, Polystyrol, Acrylnitril-Butadien-Styrol (ABS) Copolymeres, Polymeres aus α, β-ungesättigten Säuren, halogenhaltiges Polymeres, Homo- und Copolymeres von cyclischen Ethem ist.

4. Zusammensetzung nach Anspruch 3, worin die Komponente (A) Polyvinylchlorid (PVC), Polyethylen, Polystyrol oder Polypropylen ist.

5. Zusammensetzung nach Anspruch 1, worin das faserförmige oder beim Mischen faserbildende polymere Material (b1) ein Polyester, Polyamid (x) oder Polyamid (x,y), worin x und y unabhängig voneinander eine Zahl von 4 bis 14 bedeuten, ist.

6. Zusammensetzung nach Anspruch 1, worin das Polymere oder Copolymere (b2) ein Block-Copolymeres Polyetheresteramid ist, wobei die Polyethersegmente aus Polyethylenglykoleinheiten mit einem Molekulargweicht Mₙ von 200 bis 6000 Dalton bestehen und die Polyamidsegmente aus Polyamid (x) oder Polyamid (x,y) mit einem Molekulargewicht Mₙ von 200 bis 6000 Dalton bestehen, und x und y eine Zahl von 4 bis 14 bedeuten.

7. Zusammensetzung nach Anspruch 1, worin das anorganische Salz (b3) in einer Menge von 0,05-10 Gew. % bezogen auf das Copolymere (b2) vorhanden ist.

8. Zusammensetzung nach Anspruch 7, worin das anorganische Salz (b3) in einer Menge von 0,5-5 Gew. % bezogen auf das Copolymere (b2) vorhanden ist.

9. Zusammensetzung nach Anspruch 1, worin das Massenverhältnis von faserförmigem oder beim Mischen faserbildenden organischen polymeren Material (b1) zu Copolymerem (b2) von 20 zu 1 bis 1 zu 10 beträgt.

10. Zusammensetzung nach Anspruch 1, worin das Massenverhältnis von faserförmigem oder beim Mischen faserbildenden organischen polymeren Material (b1) zu Copolymerem (b2) von 10 zu 1 bis 1 zu 3 beträgt.

11. Zusammensetzung nach Anspruch 1, worin das antistatisch wirksame Gemisch aus den Komponenten (b1), (b2) und (b3) in einer Gesamtmenge von 0,1 bis 15 Gew-%, bezogen auf das thermoplastische oder elastomere polymere Substrat vorhanden ist.

12. Zusammensetzung nach Anspruch 1, worin das thermoplastische oder elastomere polymere Substrat (A) PVC, Polyethylen oder Polypropylen ist, das faserförmige oder faserbildende, organische polymere Material (b1) ein Polyester oder ein Polyamid ist, das zur Ionenleitung befähigte Copolymere (b2) ein Polyetheresteramid oder ein Polyetherester ist und das anorganische Salz einer Protonensäure (b3) NaClO₄, KPF₆ oder LiCF₃SO₃.darstellt.

13. Antistatisches Gemisch, enthaltend
(b1) ein im thermoplastischen oder elastomeren polymeren Substrat (A) nicht lösliches, faserförmiges oder beim Mischen faserbildendes organisches polymeres Material, welches ausgewählt wird aus der Gruppe bestehend aus Polyacrylsäureester, Polymethacrylsäureester, Polyacrylnitril, Polyvinylalkohol, Polyvinylacetat, Polyamid, Polyurethan und Polyester;
(b2) ein zur Ionenleitung befähigtes Polymer oder Copolymer, welches komplexierende oder solvatisierende Blöcke für ein Salz einer anorganischen oder niedermolekularen organischen Protonensäure (b3) aufweist, und eine bessere Kompatibilität zum faserförmigen oder beim Mischen faserbildenden organischen Polymeren (b1) als zum polymeren organischen Substrat (A) besitzt und welches ausgewählt wird aus der Gruppe bestehend aus oligoethoxyliertem Acrylat oder Methacrylat, in para Stellung oligoethoxyliertem Styrol, Polyetherurethan, Polyetherharnstoff, Polyetheramid, Polyetheresteramid und Polyetherester; und (b3) ein Salz einer anorganischen oder niedermolekularen organischen Protonensäure, welches im Polymeren oder Copolymeren (b2) komplexiert oder solvatisiert ist und ausgewählt wird aus der Gruppe bestehend aus LiClO₄, LiCF₃SO₃, NaClO₄, LiBF₄, NaBF₄, KBF₄, NaCF₃SO₃, KClO₄, KPF₆, KCF₃SO₃, KC₄F₉SO₃, Ca(ClO₄)₂, Ca(PF₆)₂, Mg(ClO₄)₂, Mg(CF₃SO₃)₂, Zn(ClO₄)₂, Zn(PF₆)₂ und Ca(CF₃SO₃)₂.

14. Verfahren zur Herstellung eines antistatisch ausgerüsteten thermoplastischen oder elastomeren polymeren Substrats (A), **dadurch gekennzeichnet, dass** man ein antistatisches Gemisch (B) enthaltend
(b1) ein im thermoplastischen oder elastomeren polymeren Substrat (A) nicht lösliches, faserförmiges oder beim Mischen faserbildendes, organisches polymeres Material, welches ausgewählt wird aus der Gruppe bestehend aus Polyacrylsäureester, Polymethacrylsäureester, Polyacrylnitril, Polyvinylalkohol, Polyvinylacetat, Polyamid, Polyurethan und Polyester;
(b2) ein zur Ionenleitung befähigtes Polymer oder Copolymer, welches komplexierende oder solvatisierende Blöcke für ein Salz einer anorganischen oder niedermolekularen organischen Protonensäure (b3) aufweist, und eine bessere Kompatibilität zum faserförmigen oder beim Mischen faserbildenden organischen Polymeren (b1) als zum polymeren organischen Substrat (A) besitzt und welches ausgewählt wird aus der Gruppe bestehend aus oligoethoxyliertem Acrylat oder Methacrylat, in para Stellung oligoethoxyliertem Styrol, Polyetherurethan, Polyetherharnstoff, Polyetheramid, Polyetheresteramid und Polyetherester; und
(b3) ein Salz einer anorganischen oder niedermolekularen organischen Protonensäure, welches im Polymeren oder Copolymeren (b2) komplexiert oder solvatisiert ist und ausgewählt wird aus der Gruppe bestehend aus LiClO₄, LiCF₃SO₃, NaClO₄, LiBF₄, NaBF₄, KBF₄, NaCF₃SO₃, KClO₄, KPF₆, KCF₃SO₃, KC₄F₉SO₃, Ca(ClO₄)₂, Ca(PF₆)₂, Mg(ClO₄)₂, Mg(CF₃SO₃)₂, Zn(ClO₄)₂, Zn(PF₆)₂ und Ca(CF₃SO₃)₂,
als solches oder in Form seiner einzelnen Bestandteile in beliebiger Reihenfolge und gegebenenfalls weiterer Zusätze mit einem thermoplastischen oder elastomeren Polymeren (A) mischt, wobei die vorhandenen oder sich bildenden Fasern sich untereinander berühren.

15. Verwendung eines antistatischen Gemischs nach Anspruch 13 zur antistatischen Ausrüstung von thermoplastischen oder elastomeren Polymeren.

## Claims

1. A composition comprising a thermoplastic or elastomeric polymeric substrate (A) and an antistatic mixture (B) in the form of contiguous fibres, which mixture comprises
(b1) an organic polymeric material that is fibrous or forms fibres on mixing, is not soluble in the thermoplastic or elastomeric polymeric substrate (A) and is selected from the group consisting of polyacrylic acid ester, polymethacrylic acid ester, polyacrylonitrile, polyvinyl alcohol, polyvinyl acetate, polyamide, polyurethane and polyester;
(b2) a polymer or copolymer capable of ion conduction that has blocks for complexing or solvating a salt of an inorganic or low-molecular-weight organic protonic acid (b3), has a better compatibility with the organic polymer (b1) that is fibrous or forms fibres on mixing than with the polymeric organic substrate (A), and is selected from the group consisting of oligoethoxylated acrylate or methacrylate, styrene oligoethoxylated in the para position, polyether urethane, polyether urea, polyether amide, polyether ester amide and polyether ester; and
(b3) a salt of an inorganic or low-molecular-weight organic protonic acid, which salt has been complexed or solvated in the polymer or copolymer (b2) and is selected from the group consisting of LiClO₄, LiCF₃SO₃, NaClO₄, LiBF₄, NaBF₄, KBF₄, NaCF₃SO₃, KClO₄, KPF₆, KCF₃SO₃, KC₄F₉SO₃, Ca(ClO₄)₂, Ca(PF₆)₂, Mg(ClO₄)₂, Mg(CF₃SO₃)₂, Zn(ClO₄)₂, Zn(PF₆)₂ and Ca(CF₃SO₃)₂.

2. A composition according to claim 1, wherein component (A) is a polyolefin, polystyrene, copolymer of acrylonitrile/butadiene/styrene (ABS), α,β-unsaturated acid polymer, halogen-containing polymer, cyclic ether homo- or co-polymer, unsaturated alcohol or amine polymer, polyacetal, polyphenylene oxide, polyurethane, polyamide, polyester, polyurea, polycarbonate, polysulfone or natural rubber.

3. A composition according to claim 2, wherein component (A) is a polyolefin, polystyrene, acrylonitrile/butadiene/styrene (ABS) copolymer, α,β-unsaturated acid polymer, halogen-containing polymer or cyclic ether homo- or co-polymer.

4. A composition according to claim 3, wherein component (A) is polyvinyl chloride (PVC), polyethylene, polystyrene or polypropylene.

5. A composition according to claim 1, wherein the polymeric material (b1) that is fibrous or forms fibres on mixing is a polyester, polyamide (x) or polyamide (x,y) in which x and y are each independently of the other a number from 4 to 14.

6. A composition according to claim 1, wherein the polymer or copolymer (b2) is a block copolymer polyether ester amide in which the polyether segments consist of polyethylene glycol units having a molecular weight Mₙ of from 200 to 6000 daltons and the polyamide segments consist of polyamide (x) or polyamide (x,y) having a molecular weight Mₙ of from 200 to 6000 daltons, x and y being a number from 4 to 14.

7. A composition according to claim 1, wherein the inorganic salt (b3) is present in an amount of from 0.05 to 10 % by weight, based on the copolymer (b2).

8. A composition according to claim 7, wherein the inorganic salt (b3) is present in an amount of from 0.5 to 5 % by weight, based on the copolymer (b2).

9. A composition according to claim 1, wherein the ratio by. mass of organic polymeric material (b1) that is fibrous or forms fibres on mixing to copolymer (b2) is from 20 : 1 to 1 : 10.

10. A composition according to claim 1, wherein the ratio by mass of organic polymeric material (b1) that is fibrous or forms fibres on mixing to copolymer (b2) is from 10 : 1 to 1 : 3.

11. A composition according to claim 1, wherein the antistatically active mixture of components (b1), (b2) and (b3) is present in a total amount of from 0.1 to 15 % by weight, based on the thermoplastic or elastomeric polymeric substrate.

12. A composition according to claim 1, wherein the thermoplastic or elastomeric polymeric substrate (A) is PVC, polyethylene or polypropylene, the fibrous or fibre-forming organic polymeric material (b1) is a polyester or a polyamide, the copolymer (b2) capable of ion conduction is a polyether ester amide or a polyether ester and the inorganic salt of a protonic acid (b3) is NaClO₄, KPF₆ or LiCF₃SO₃.

13. An antistatic mixture comprising
(b1) an organic polymeric material that is fibrous or forms fibres on mixing, is not soluble in the thermoplastic or elastomeric polymeric substrate (A) and is selected from the group consisting of polyacrylic acid ester, polymethacrylic acid ester, polyacrylonitrile, polyvinyl alcohol, polyvinyl acetate, polyamide, polyurethane and polyester;
(b2) a polymer or copolymer capable of ion conduction that has blocks for complexing or solvating a salt of an inorganic or low-molecular-weight organic protonic acid (b3), has a better compatibility with the organic polymer (b1) that is fibrous or forms fibres on mixing than with the polymeric organic substrate (A), and is selected from the group consisting of oligoethoxylated acrylate or methacrylate, styrene oligoethoxylated in the para position, polyether urethane, polyether urea, polyether amide, polyether ester amide and polyether ester; and
(b3) a salt of an inorganic or low-molecular-weight organic protonic acid, which salt has been complexed or solvated in the polymer or copolymer (b2) and is selected from the group consisting of LiClO₄, LiCF₃SO₃, NaClO₄, LiBF₄, NaBF₄, KBF₄, NaCF₃SO₃, KClO₄, KPF₆, KCF₃SO₃, KC₄F₉SO₃, Ca(ClO₄)₂, Ca(PF₆)₂, Mg(ClO₄)₂, Mg(CF₃SO₃)₂, Zn(ClO₄)₂, Zn(PF₆)₂ and Ca(CF₃SO₃)₂.

14. A process for the preparation of a thermoplastic or elastomeric polymeric substrate (A) having antistatic properties, wherein an antistatic mixture (B) comprising
(b1) an organic polymeric material that is fibrous or forms fibres on mixing, is not soluble in the thermoplastic or elastomeric polymeric substrate (A) and is selected from the group consisting of polyacrylic acid ester, polymethacrylic acid ester, polyacrylonitrile, polyvinyl alcohol, polyvinyl acetate, polyamide, polyurethane and polyester;
(b2) a polymer or copolymer capable of ion conduction that has blocks for complexing or solvating a salt of an inorganic or low-molecular-weight organic protonic acid (b3), has a better compatibility with the organic polymer (b1) that is fibrous or forms fibres on mixing than with the polymeric organic substrate (A), and is selected from the group consisting of oligoethoxylated acrylate or methacrylate, styrene oligoethoxylated in the para position, polyether urethane, polyether urea, polyether amide, polyether ester amide and polyether ester; and
(b3) a salt of an inorganic or low-molecular-weight organic protonic acid, which salt has been complexed or solvated in the polymer or copolymer (b2) and is selected from the group consisting of LiClO₄, LiCF₃SO₃, NaClO₄, LiBF₄, NaBF₄, KBF₄, NaCF₃SO₃, KClO₄, KPF₆, KCF₃SO₃, KC₄F₉SO₃, Ca(ClO₄)₂, Ca(PF₆)₂, Mg(ClO₄)₂, Mg(CF₃SO₃)₂, Zn(ClO₄)₂, Zn(PF₆)₂ and Ca(CF₃SO₃)₂,
as it is or in the form of its individual components, in any sequence, and, if desired, further additives, is/are mixed with a thermoplastic or elastomeric polymer (A), the fibres that are present or that are formed being contiguous with one another.

15. The use of an antistatic mixture according to claim 13 for rendering thermoplastic or elastomeric polymers antistatic.

## Revendications

1. Composition renfermant un substrat polymère thermoplastique ou élastomère (A) et un mélange antistatique (B) sous forme de fibres en contact entre elles, qui (b1) est une matière polymère organique fibreuse ou fibrogène lors du mélange, insoluble dans le substrat polymère thermoplastique ou élastomère (A), et est prise dans le groupe comprenant des polyacrylates, des polyméthacrylates, le polyacrylonitrile, le poly(alcool vinylique), le poly(acétate de vinyle), le polyamide, le polyuréthanne et le polyester ; (b2) un polymère ou copolymère apte à la conduction ionique, qui présente des blocs qui complexent ou solvatent un sel d'un acide protonique inorganique ou organique de bas poids moléculaire (b3), et qui possède une meilleure compatibilité avec le polymère organique fibreux ou fibrogène au cours du mélange (b1) qu'avec le substrat polymère organique (A) et qui est pris dans le groupe comprenant un acrylate ou méthacrylate oligooxéthylé, un styrène oligooxéthylé en position para, une polyétheruréthanne, une polyétherurée, un polyétheramide, un polyétheresteramide et un polyétherester ; et (b3) un sel d'un acide protonique inorganique ou organique de bas poids moléculaire qui est complexé ou solvaté dans le polymère ou copolymère (b2) et est pris dans le groupe comprenant LiClO₄, LiCF₃SO₃, NaClO₄, LiBF₄, NaBF₄, KBF₄, NaCF₃SO₃, KClO₄, KPF₆, KCF₃SO₃, KC₄F₉SO₃, Ca(ClO₄)₂, Ca(PF₆)₂, Mg(ClO₄)₂, Mg(CF₃SO₃)₂, Zn(ClO₄)₂, Zn(PF₆)₂ et Ca(CF₃SO₃)₂.

2. Composition selon la revendication 1, où le composant (A) est une polyoléfine, un polystyrène, un copolymère d'acrylonitrile-butadiène-styrène (ABS), un polymère d'acides insaturés en α,β, un polymère halogéné, un homo- et copolymère d'éthers cycliques, un polymère d'alcools et d'amines insaturés, un polyacétal, un poly(oxyphénylène), un polyuréthanne, un polyamide, un polyester, une polyurée, un polycarbonate, un polysulfone ou un caoutchouc naturel.

3. Composition selon la revendication 2, où le composant (A) est une polyoléfine, un polystyrène, un copolymère d'acrylonitrile-butadiène-styrène (ABS), un polymère d'acides insaturés en α,β, un polymère halogéné, un homo- et copolymère d'éthers cycliques.

4. Composition selon la revendication 3, où le composant (A) est le poly(chlorure de vinyle) (PVC), le polyéthylène, le polystyrène ou le polypropylène.

5. Composition selon la revendication 1, où la matière polymère fibreuse ou fibrogène au cours du mélange (b1) est un polyester, un polyamide (x) ou polyamide (x,y), où x et y indépendamment vont de 4 à 14.

6. Composition selon la revendication 1, où le polymère ou le copolymère (b2) est un copolymère à blocs de polyétheresteramide, où les segments de polyéther sont constitués par des unités de polyéthylèneglycol présentant une masse moléculaire Mₙ de 200 à 6000 daltons et les segments de polyamide (x) ou de polyamide (x,y) présentent une masse moléculaire Mₙ de 200 à 6000 daltons, et x et y vont de 4 à 14.

7. Composition selon la revendication 1, où le sel inorganique (b3) est présent en une quantité de 0,05 à 10 % en masse par rapport au copolymère (b2).

8. Composition selon la revendication 7, où le sel inorganique (b3) est présent en une quantité de 0,5 à 5 % en masse, par rapport au copolymère (b2).

9. Composition selon la revendication 1, où le rapport en masse de la matière polymère organique fibreuse ou fibrogène au cours du mélange (b1) au copolymère (b2) est de 20 à 1 à 1 à 10.

10. Composition selon la revendication 1, où le rapport en masse de la matière polymère organique fibreuses ou fibrogène au cours du mélange (b1) au copolymère (b2) est de 10 à 1 à 1 à 3.

11. Composition selon la revendication 1, où le mélange antistatique efficace est constitué par des composants (b1), (b2) et (b3) et est contenu en une quantité totale de 0,1 à 15 % en masse, par rapport au substrat polymère thermoplastique ou élastomère.

12. Composition selon la revendication 1, où le substrat polymère thermoplastique ou élastomère (A) est le PVC, le polyéthylène ou le polypropylène, la matière organique fibreuse ou fibrogène au cours du mélange (b1) est un polyester ou un polyamide, le copolymère apte à la conduction ionique (b2) est un polyétheresteramide ou un polyétherester, et le sel inorganique d'un acide protonique (b3) est NaClO₄, KPF₆ ou LiCF₃SO₃.

13. Mélange antistatique renfermant
(b1) une matière organique polymère fibreuse ou fibrogène lors du mélange, insoluble dans le substrat polymère thermoplastique ou élastomère (A), qui est prise dans le groupe comprenant des polyacrylates, des polyméthacrylates, le polyacrylo-nitrile, le poly(alcool vinylique), le poly(acétate de vinyle) le polyamide, le polyuréthanne et le polyester ;
(b2) un polymère ou copolymère apte à la conduction ionique, qui présente des blocs qui complexent ou solvatent un sel d'un acide protonique inorganique ou organique de bas poids moléculaire (b3), et possède une meilleure compatibilité avec le polymère organique fibreux ou fibrogène au cours du mélange (b1) qu'avec le substrat polymère organique (A) et qui est pris dans le groupe comprenant un acrylate ou méthacrylate oligoéthoxylé, un styrène oligoéthoxylé en position para, un polyétheruréthanne, une polyétherurée, un polyétheramide, un polyétherester-amide et un polyétherester ; et
(b3) un sel d'un acide protonique inorganique ou organique de bas poids moléculaire, qui est complexé ou solvaté dans le polymère ou copolymère (b2) et est pris dans le groupe comprenant LiClO₄, LiCF₃SO₃, NaClO₄, LiBF₄, NaBF₄, KBF₄, NaCF₃SO₃, KClO₄, KPF₆, KCF₃SO₃, KC₄F₉SO₃, Ca(ClO₄)₂, Ca(PFe)₂, Mg (ClO₄)₂. Mg(CF₃SO₃)₂, Zn(ClO₄)₂, Zn(PF₆)₂ et Ca(CF₃SO₃)₂.

14. Procédé pour la préparation d'un substrat polymère thermoplastique ou élastomère muni d'un apprêt antistatique (A), **caractérisé en ce qu'**on mélange un mélange antistatique (B) renfermant
(b1) une matière polymère organique fibreuse ou fibrogène au cours du mélange qui n'est pas soluble dans le substrat polymère thermoplastique ou élastomère (A), pris dans le groupe comprenant un polyacrylate, un polyméthacrylate, un polyacrylonitrile, le poly(alcool vinylique), le poly(acétate de vinyle), un polyamide, un polyuréthanne et un polyester ;
(b2) un polymère ou copolymère apte à la conduction ionique, qui présente des blocs qui complexent ou solvatent un sel d'un acide protonique inorganique ou organique de bas poids moléculaire (b3) et possède une meilleure comptabilité avec la matière organique polymère fibreuse ou fibrogène lors du mélange (b1) qu'avec le substrat polymère organique (A) et qui est pris dans le groupe comprenant un acrylate ou méthacrylate oligooxéthyle, un styrène oligooxéthyle en position para, un polyétheruréthanne, une polyétherurée, un polyétheramide, un polyéther-esteramide et un polyétherester ; et
(b3) un sel d'un acide protonique inorganique ou organique de bas poids moléculaire, qui est complexé ou solvaté dans le polymère ou copolymère (b2) et est pris dans le groupe comprenant LiClO₄, LiCF₃SO₃, NaClO₄, LiBF₄, NaBF₄, KBF₄, NaCF₃SO₃, KClO₄, KPF₆, KCF₃SO₃, KC₄F₉SO₃, Ca(ClO₄)₂, Ca(PF₆)₂, Mg(ClO₄)₂, Mg(CF₃SO₃)₂, Zn(ClO₄)₂, Zn(PF₆)₂ et Ca(CF₃SO₃)₂,
en tant qu tel ou sous forme de ses constituants individuels, dans un ordre quelconque, et éventuellement d'autres additifs, avec un polymère thermoplastique ou élastomère (A), les fibres présents ou en formation sont en contact entre elles.

15. Utilisation d'un mélange antistatique selon la revendication 13, pour l'apprêtage antistatique de polymères thermoplastiques ou élastomères.
